# EUROPÄISCHE PATENTSCHRIFT

(11) **EP 3 482 093 B1**
(45) Veröffentlichungstag und Bekanntmachung des Hinweises auf die Patenterteilung: **27.10.2021**
(21) Anmeldenummer: 17732390.4
(22) Anmeldetag: 20.06.2017
(51) Int. Cl.: F16B 31/02, F16B 37/14, F16B 1/00

(54) **ÜBERWACHUNGSAUFSATZ ZUR ÜBERWACHUNG EINER MUTTER EINER SCHRAUBVERBINDUNG**
MONITORING ATTACHMENT FOR MONITORING A NUT OF A SCREW CONNECTION
EMBOUT DE SURVEILLANCE D'UN ÉCROU D'UN RACCORD À VIS

(30) Priorität: 08.07.2016 DE 102016112567; 19.06.2017 DE 102017113376
(43) Veröffentlichungstag der Anmeldung: 15.05.2019
(73) Patentinhaber: Weidmüller Interface GmbH & Co. KG, 32758 Detmold (DE)
(72) Erfinder: HELM, Peter, 32758 Detmold (DE); BERGMANN, Franz-Josef, 32839 Steinheim (DE); SCHLINGMANN, Hans, 32805 Horn-Bad Meinberg (DE); HEGGEMANN, Christian, 32758 Detmold (DE); NIGGEMANN, Steffen, 33106 Paderborn (DE); BAUERKÄMPER, Dirk, 32791 Lage (DE)
(74) Vertreter: Specht, Peter
(86) Internationale Anmeldenummer: PCT/EP2017/065075
(87) Internationale Veröffentlichungsnummer: WO 2018/007143

(56) Entgegenhaltungen:
- WO-A2-2009/003853
- DE-A1-102010 001 144
- DE-A1-102013 218 845
- JP-A- 2015 158 722
- US-A- 4 484 132

## Beschreibung

Die vorliegende Erfindung betrifft einen Überwachungsaufsatz nach dem Oberbegriff der Ansprüche 1 und 5.

Die DE 10 2013 218 845 A1 offenbart einen Überwachungsaufsatz zur Überwachung einer Mutter auf Rissbildung. Dieser weist einen Hülsenabschnitt zur Einfassung der Mutter auf. In einer Ausführungsvariante wird auf den Hülsenabschnitt eine Leiterbahn aufgetragen. Diese wird oberflächlich mit einem Lack versehen. Die Überwachung einer Mutter mit dieser Vorrichtung hat sich an sich bewährt, soll allerdings mit der vorliegenden Erfindung weiter verbessert werden.

Ausgehend vom vorgenannten Stand der Technik ist es somit die Aufgabe der vorliegenden Erfindung, eine bessere Verbindung zwischen Leiterbahn und Hülsenabschnitt zu erreichen.

Die vorliegende Erfindung löst diese Aufgabe durch einen Überwachungsaufsatz mit den Merkmalen der Ansprüche 1 und 5.

Anspruch 1 schafft einen Überwachungsaufsatz zur Überwachung einer Mutter einer Schraubverbindung auf Rissbildung, Deformation und/oder Bruch, wobei der Überwachungsaufsatz einen auf den Außenumfang der Mutter setzbaren Hülsenabschnitt mit einem Leiter aufweist, der bei einer Deformation, einem Riss oder einem Bruch der Mutter unterbrochen wird, wobei der Leiter in wenigstens ein Material eingebettet ist, das ein anderes Material ist als das Material, aus dem der Leiter besteht.

Dabei kann der Leiter als ein elektrischer Leiter oder als ein optischer Leiter ausgebildet sein. Der Leiter kann ferner direkt in das Material, insbesondere das Polymermaterial des Hülsenabschnitts, integriert bzw. eingebettet sein bzw. werden.

Der Hülsenabschnitt kann axial relativ lang ausgebildet werden. Er kann aber bei einer bevorzugten Ausgestaltung axial auch sehr kurz ausgestaltet werden, so dass er einen Ring bildet. Ein Ring ist im Sinne dieser Beschreibung ein axial kurzer Hülsenabschnitt. Diese Variante ist bauraum- und materialsparend sowie sehr kompakt realisierbar.

Es ist dabei vorteilhaft, einfach und sicher, wenn der Leiter bezogen auf seine axiale Erstreckung ganz oder abschnittsweise sowie bezogen auf seinen Umfang ganz oder teilweise, nach einer Variante vorzugsweise überwiegend, in das elektrisch und/oder optisch nicht leitende Material eingebettet ist.

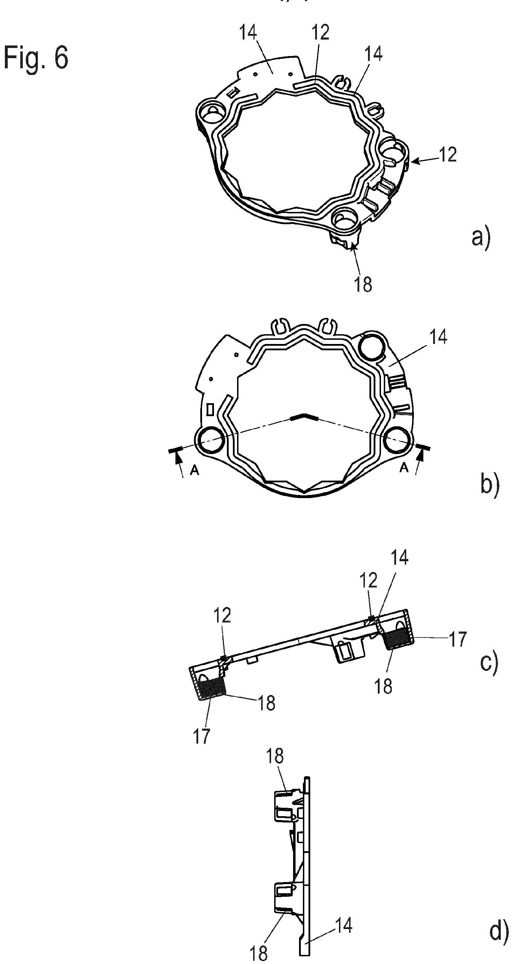

Im Unterschied zu bisher bekannten Lösungen mit einem einseitig auf den Leiter aufgebrachten Lack ist der elektrische Leiter im Fall einer ersten erfindungsgemäßen Variante eines Überwachungsaufsatzes in ein Material, vorzugsweise in ein elektrisch nicht leitendes Polymermaterial eingebettet, wodurch eine noch bessere Anbindung des Leiters an den Hülsenabschnitt und an den Überwachungsaufsatz insgesamt erreicht wird. Dabei kann der Leiter direkt in die Gussform des Hülsenabschnitts eingelegt und mit Polymermaterial umspritzt werden. Der Überwachungsaufsatz der Fig. 6 wird derart oder alternativ mit dem MID-Verfahren ("Molded Interconnect Device" (kurz: MID)), speziell durch das LDS-Verfahren hergestellt. Zusätzlich wird die aufgebrachte Schicht des Leiters noch mit einem Lack versiegelt/geschützt.

In den Hülsenabschnitt, insbesondere in das Polymermaterial können nach einer Variante der Erfindung einer oder mehrere Magneten integriert werden, der oder die zur Befestigung des Hülsenabschnittes an dem zu überwachenden Bauteil dienen. Derart ist die Befestigung einfach und schnell realisierbar. Denn das Befestigen kann dann beispielsweise einfach dadurch erfolgen, dass der Hülsenabschnitt auf die Mutter gesetzt wird und der oder die Magneten mit einem unterhalb der Mutter befindlichen ferromagnetischen Bauteil zusammenwirken.

Es kann das elektrisch und/oder optisch nicht leitende Material ein Glasmaterial, ein Kunststoffmaterial, ein Keramikmaterial, ein Kohlefasermaterial, ein Holzmaterial oder ein Metallmaterial oder ein Verbundwerkstoff aus einem oder mehreren dieser Stoffe sein. Es wird bevorzugt, dass das Material ein Kunststoffmaterial, insbesondere ein Polymermaterial ist.

Es ist auch denkbar und vorteilhaft, wenn der elektrische Leiter zwischen mehrere Bereiche, insbesondere Schichten, aus einem oder mehreren Material(ien) eingebettet ist/wird, wobei wenigstens einer der Materialbereiche nichtleitend ist.

Der erfindungsgemäße Überwachungsaufsatz dient der Überwachung einer Mutter einer Schraubverbindung auf Rissbildung, Deformation und/oder Bruch. Typische Verbindungsglieder der Mutter sind dabei u.a. Schrauben, Gewindebolzen oder Gewindestangen. Der Überwachungsaufsatz dient der Ermittlung eines Zustandes, in welchem die Mutter geschädigt ist, so dass ein entsprechendes Signal z.B. ein Warnsignal oder ein Signal für eine Abschaltvorrichtung ausgelöst wird. Diese Abschaltvorrichtung beeinflusst dann eine Bremse, vorzugsweise ergänzend eine Pitchverstellung und weiter vorzugsweise auch die Gondelposition, sodass die insbesondere Windstrom erzeugende Anlage in einen abgesicherten Zustand versetzt wird.

Der Überwachungsaufsatz weist nach einer bevorzugten Variante der Erfindung den auf den Außenumfang der Mutter aufsetzbaren Hülsenabschnitt mit einem elektrischen Leiter auf oder bildet diesen aus. Die Mutter ist dabei nicht Teil des erfindungsgemäßen Überwachungsaufsatzes. Der Hülsenabschnitt ist vorzugsweise in seiner Innenkontur der Form der Mutter zumindest bereichsweise geometrisch angepasst, so dass er formschlüssig auf diese aufsetzbar ist.

Der elektrische Leiter kann am Hülsenabschnitt oder im Material des Hülsenabschnitts integriert vorliegen und bei einer Deformation, einem Riss oder einem Bruch der Mutter, unterbrochen werden.

Im Unterschied zu bisher bekannten Lösungen mit einem einseitig auf den Leiter aufgebrachten Lack ist der elektrische Leiter im Fall einer ersten erfindungsgemäßen Variante eines Überwachungsaufsatzes in ein elektrisch nicht leitendes Polymermaterial vorzugsweise umfangsgeschlossen oder jedenfalls an einem Teil seines Umfangs eingebettet, wodurch eine noch bessere Anbindung des Leiters an den Hülsenabschnitt und an den Überwachungsaufsatz insgesamt erreicht wird.

Alternativ kann der elektrische Leiter in einer zweiten erfindungsgemäßen Variante eines Überwachungsaufsatzes ganz oder teilweise aus einem elektrisch leitfähigen Polymermaterial bestehen.

Vorteilhafte Ausgestaltungen der Erfindung sind Gegenstand der abhängigen Ansprüche.

Der Hülsenabschnitt kann nach einer Variante auch vorteilhaft als ein spritzgegossener Schaltungsträger ausgebildet sein oder einen spritzgegossenen Schaltungsträger aufweisen. In ersterem Fall ist der Hülsenabschnitt vorzugsweise und einfach selbst ein sogenanntes MID-Bauteil. Im zweiten Fall kann ein entsprechendes MID-Bauteil an den Hülsenabschnitt angebracht sein/werden. Dabei kann es sich z.B. um eine Polymerfolie handeln, in welche der Leiter z.B. als Leiterbahn eingebettet ist oder einen Formkörper, in welchen der Leiter z.B. als Metalldraht eingebettet ist. Der Formkörper - aber auch die Polymerfolie - kann/können z.B. mit dem Hülsenabschnitt durch Polymerschweißen verbunden werden.

Bei dem elektrischen Leiter kann es sich vorteilhaft um einen ein- oder mehrlitzigen Metalldraht, z.B. einen Kupferdraht oder um eine Leiterbahn handeln. Die Leiterbahn kann in einem Zwischenschritt zwischen zwei Schüssen eines Spritzgussverfahrens als Metallbahn in das Polymermaterial eingebettet werden. Alternativ ist es auch möglich, eine vorgefertigte vorzugsweise ringförmige - mit entsprechenden Leiterbahnen versehene - Leiterplatte zu umspritzen. Anstelle eines elektrischen Leiters könnte alternativ ein optischer Leiter zur Überwachung verwendet werden, der dann den beschriebenen elektrischen Leiter ersetzt.

Der elektrische Leiter ist vorzugsweise als nicht umfangsgeschlossener Ring bzw. auf einer nicht umfangsgeschlossenen Kreisbahn in das Polymermaterial eingebettet.

Der Hülsenabschnitt kann bereichsweise oder über seinen gesamten Umfang eine oder mehrere Sollbruchstellen aufweisen. Sofern mehrere Sollbruchstellen vorgesehen sind, so sind diese bevorzugt umfangsverteilt um den Hülsenabschnitt verteilt. Zweckmäßig sind die Sollbruchstellen in einem Bereich des Hülsenabschnitts angeordnet, in welchem auch der elektrische Leiter angeordnet ist.

In einer bevorzugten Ausführungsvariante ist der Hülsenabschnitt einstückig aus einem einzigen Polymermaterial ausgebildet, in welchen der Leiter eingebettet und vorzugsweise mit diesem Polymermaterial umspritzt ist. Der Hülsenabschnitt ist dabei vorzugsweise nahtfrei, also frei von Klebe- oder Schweißnähten oder dergleichen.

Das elektrisch nicht leitende Polymermaterial kann als eine ein- oder mehrschichtige Polymerfolie ausgebildet sein, in welche der elektrische Leiter eingebettet ist und welche an dem Hülsenabschnitt angeordnet ist. Die Polymerfolie kann beispielsweise durch Kunststoffschweißen oder Kleben oder besonders bevorzugt spritzvergossen mit dem Hülsenabschnitt verbunden sein. Die Polymerfolie mit dem Leitungsträger kann als ein spritzgegossener Schaltungsträger ausgebildet sein.

Bevorzugt weist der Hülsenabschnitt jedenfalls innen eine Mehrkantform zur formschlüssigen Einfassung einer Mutter an deren Außenumfang auf, um dort dicht zu sitzen.

Der Überwachungsaufsatz bzw. dessen Stege können eine oder mehrere erste Rastnasen aufweisen, welche in das Gewinde einer Schraube oder eines Gewindebolzens bzw. einer Gewindestange eingreifen.

Das nicht leitende Polymermaterial kann bevorzugt ein Thermoplast sein und besonders vorteilhaft als ein Polyamid, ein Polybutylenterephthalat, ein Polypropylen und/oder ein Acrylnitril-Butadien-Styrol ausgebildet sein. Auch Copolymere können vorgesehen sein. Das Polymermaterial kann zudem Zuschlagstoffe aufweisen, um beispielsweise die Sprödigkeit zu erhöhen, was für die Lösung der bestehenden Aufgabe vorteilhaft sein kann. Eine Variante dabei ist die Zugabe von Glasfasern.

Das elektrisch leitende Polymermaterial kann als ein Polymermaterial mit elektrisch leitenden Zusätzen, insbesondere mit metallischen Zusätzen ausgebildet sein. Typischerweise können hierfür dem Polymermaterial Metallpulver oder Metallspäne zugegeben werden, beispielsweise zu 20 bis 60 Gew.%.

Ein einfaches und dennoch zu einem hervorragend arbeitenden Überwachungsaufsatz führendes nicht beanspruchtes Verfahren zur Herstellung des erfindungsgemäßen Uberwachungsaufsatzes weist die folgenden Verfahrensschritte auf:
a) Bereitstellen eines Spritzgusswerkzeuges mit einem Hohlraum zur Ausbildung des Hülsenabschnittes;
b) Einlegen des elektrischen Leiters in den Hohlraum;
c) Umspritzen des Leiters mit dem elektrisch nicht leitenden Polymermaterial unter Ausbildung des Hülsenabschnitts mit dem darin eingebetteten elektrischen Leiter.

Der Hülsenabschnitt kann derart direkt bereits als Überwachungsaufsatz genutzt werden oder mit weiteren Bauteilen, z.B. einem Sprengring, ergänzt werden.

Alternativ kann in einem weiteren Verfahren zunächst in einem Spritzverfahren eine erste Folienlage bereitgestellt werden, ein Leiter auf der Folie angeordnet werden und mit einer zweiten Folienlage überspritzt werden, so dass sich eine Polymerfolie mit einem eingebetteten Leiter bildet. Die Polymerfolie kann sodann bei der Herstellung des Hülsenabschnitts in den Überwachungsaufsatz integriert werden.

Der Überwachungsaufsatz kann besonders bevorzugt zur Steuerung und/oder Regelung einer Bremsvorrichtung in einer Windkraftanlage verwendet werden. Der erhöhte elektrische Widerstandswert bei einer Unterbrechung der Leiterbahn bei einem Defekt der Mutter kann als Befehlssignal zum Auslösen der Bremsvorrichtung genutzt werden.

Ein bevorzugtes Ausführungsbeispiel der vorliegenden Erfindung wird anhand der beigefügten Figuren näher erläutert. Vielmehr sind an sich bekannte Abwandlungen des Ausführungsbeispiels ebenfalls im Gesamtkontext der vorliegenden Erfindung offenbart. Es zeigen:
- Fig. 1: eine Perspektivansicht einer Anordnung umfassend eine Schraubverbindung, mit einem Gewindebolzen und einer Mutter und einen auf der Mutter angeordneten Überwachungsaufsatz;
- Fig. 2: eine Perspektivansicht des Überwachungsaufsatzes der Fig. 1;
- Fig. 3: eine teilgeschnittene Ansicht der Anordnung der Fig. 1;
- Fig. 4: eine Detailansicht eines Teilbereichs des Überwachungsaufsatzes der Fig. 3;
- Fig. 5: eine Explosionsansicht des Überwachungsaufsatzes der Fig. 1 bis 4; und
- Fig. 6: in a) eine perspektivische Ansicht eines weiteren Ausführungsbeispiels eines erfindungsgemäßen Überwachungsaufsatzes, in b) eine Draufsicht auf den Überwachungsaufsatz aus a), in c) einen Schnitt senkrecht zu der Verbindung A-A und in d) eine Seitenansicht des Überwachungsaufsatzes aus a) bis c).

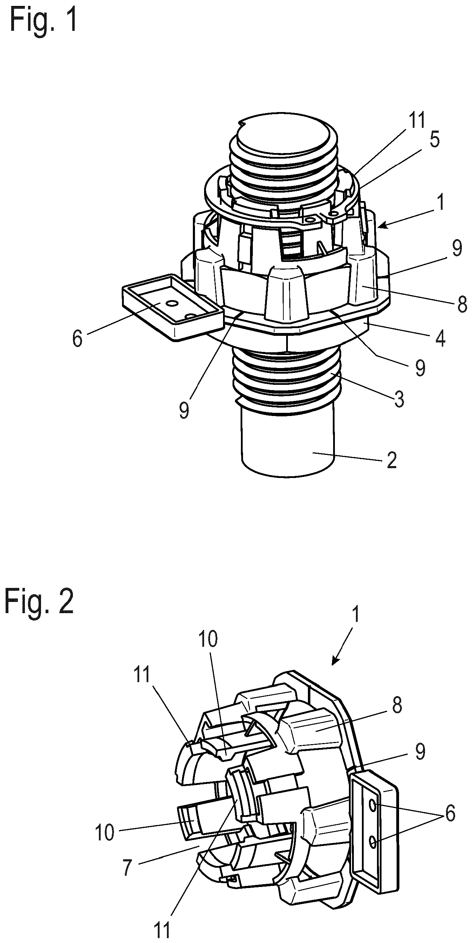

Fig. 1 bis 5 zeigt eine Schraubverbindung mit einem Gewindebolzen 2, wie er beispielsweise an einer Flanschverbindung zur Festlegung eines Rotorblatts an einer Rotornabe einer Windkraftanlage eingesetzt werden kann. Der Gewindebolzen 2 ist mit einer Mutter 4 verbunden, welche über ein nicht näher dargestelltes Innengewinde in ein Gewinde 3 des Gewindebolzens 2 eingreift.

Die Mutter 4 wird zumindest bereichsweise von einer erfindungsgemäßen Variante eines Überwachungsaufsatzes 1 eingefasst bzw. umfasst.

Der Überwachungsaufsatz 1 weist einen Hülsenabschnitt 14 auf, der eine zentrale Längsachse hat und weiter einen Innenbereich zur Aufnahme der Mutter 4 aufweist. Der Hülsenabschnitt 14 weist einen umfangsgeschlossenen ersten Teilbereich und einen zweiten Teilbereich auf, der in mehrere Stege 10 und 11 unterteilt ist. Diese Stege 10, 11 liegen vorzugsweise auf einer gemeinsamen fiktiven Kreisbahn. Zwischen den Stegen 10, 11 sind Aussparungen 7 angeordnet, so dass die Stege 10, 11 lediglich einseitig festgelegt sind und Rückstellkräfte entwickeln sofern sie radial aus der gemeinsamen Kreisbahn herausbewegt werden.

Der Hülsenabschnitt 14 kann aus einem Kunststoff- bzw. einem Polymermaterial bestehen. Dieses kann ein thermoplastisches Polymermaterial sein.

Die Stege 10, 11 weisen Rastnasen auf, welche vorzugsweise endständig an diesen Stegen 10, 11 angeordnet sind. Die Rastnasen von einer Anzahl von ersten Stegen 10 stehen radial zur Längsachse des Hülsenabschnitts hin aus der Fläche der Stege 10 hervor. Die Rastnasen von einer Anzahl von zweiten Stegen 11 stehen radial von der Längsachse weg aus der Fläche der Stege 11 hervor.

Die ersten Stege 10 greifen dabei in das Gewinde 3 des Gewindebolzens 2 ein und ermöglichen auf diese Weise eine axiale Sicherung des Überwachungsaufsatzes 1 gegenüber dem Gewindebolzen 2.

Die zweiten Stege 11 hintergreifen mittels der Rastnasen einen Sprengring 5, welcher die Stege 10, 11 des Überwachungsaufsatzes 1 umfasst und so ein Aufspreizen der Stege 10 und damit Lösen bzw. ein Außer-Eingriffbringen des Überwachungsaufsatzes 1 gegenüber des Gewindes 3 des Gewindebolzens 2 verhindert.

Die Innenquerschnittsfläche des Hülsenabschnitts 14 entspricht hier-was aber nicht zwingend ist - im Wesentlichen dem Außenquerschnitt der Mutter 4. Ist diese wie in Fig. 1 mehreckig, so ist auch die Innenquerschnittsfläche entsprechend mehreckig und hinreichend groß, um formschlüssig über die Mutter 4 gesteckt werden zu können.

Die Mutter 4 und der Überwachungsaufsatz 1 können gemeinsam in einer Schraubbewegung um die Längsachse den Gewindebolzen herum bewegt werden. Der Hülsenabschnitt 14 des Überwachungsaufsatzes 1 weist einen umlaufenden Vorsprung 15 auf, welcher radial hervorsteht.

Der Überwachungsaufsatz 1 weist selbst eine mehreckige, insbesondere sechseckige Außenkontur auf, mit mehreren, vorzugsweise sechs, Ecken und/oder Eckelementen 8.

Überdies weist der Überwachungsaufsatz 1, insbesondere eine oder mehrere Sollbruchstellen 9 vorzugsweise entlang des umlaufenden Vorsprungs 15 auf. Sofern es zu einem Riss der Mutter 4 kommt, so kommt es ebenfalls zu einem Riss des Überwachungsaufsatzes 1 vorzugsweise an der Sollbruchstelle 9.

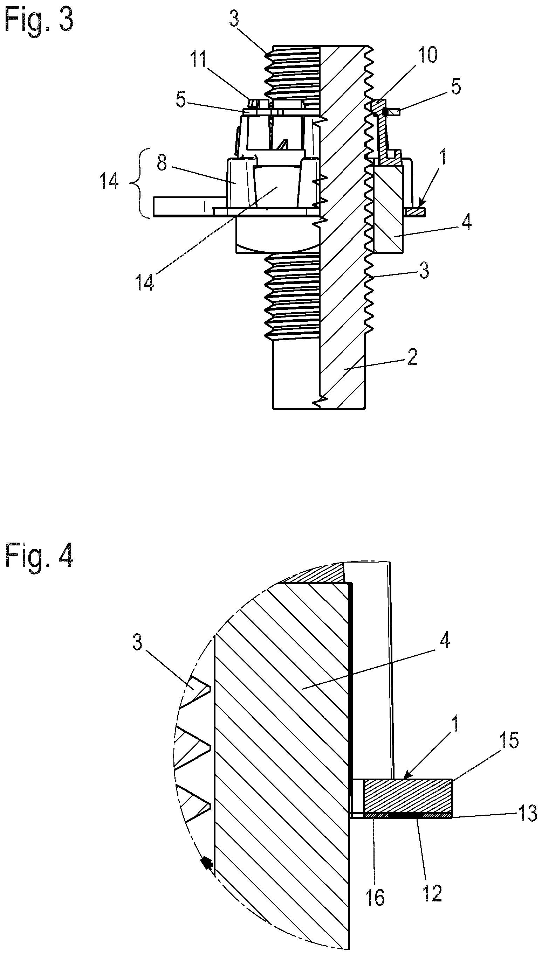

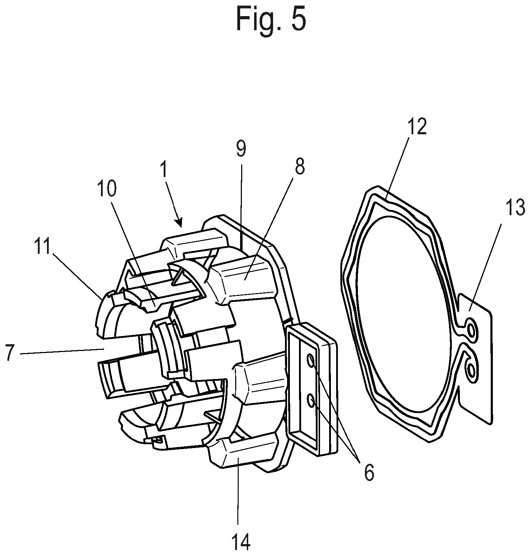

In Fig. 4 erkennt man, dass der Überwachungsaufsatz 1 einen elektrischen Leiter 12 aufweist. In der Variante der Fig. 4 und 5 ist dieser Leiter 12 in elektrisch nicht leitendes Polymermaterial 13 einer Polymerfolie 16 eingebettet.

Diese Polymerfolie 16 kann bei der Herstellung des Hülsenabschnitts 14 in eine Spritzgussform eingelegt werden, und der Hülsenabschnitt 14 kann bei Einleiten von weiterem Polymermaterial gebildet bzw. vervollständigt werden und sich zugleich mit der Polymerfolie verbinden.

Alternativ zu der in Fig. 4 und 5 dargestellten Variante eines erfindungsgemäßen Überwachungsaufsatzes 1 ist es möglich, den Leiter direkt in das Polymermaterial des Hülsenabschnitts zu integrieren. Dabei kann der Leiter direkt in die Gussform des Hülsenabschnitts eingelegt und mit Polymermaterial umspritzt werden. Eine solche Ausgestaltung ist in Fig. 6 dargestellt und wird weiter unten noch näher beschrieben.

In einer nicht dargestellten, jedoch bevorzugten Variante der Erfindung kann ein elektrischer Leiter 12, z.B. in Form eines Kupferdrahtes, im Bereich des Vorsprungs 15 des Überwachungsaufsatzes 1 vorgesehen sein.

Der Leiter 12 kann beispielsweise als Metalldraht oder als Leiterbahn ausgebildet sein. Es ist beispielsweise auch möglich eine Leiterbahn zunächst auf eine Leiterplatte aufzubringen und diese sodann mit Polymermaterial zu umspritzen und damit einzubetten.

In Fig. 5 ist die Ausgestaltung des elektrischen Leiters 12 näher dargestellt. Er ist auf einer nicht umfangsgeschlossenen Kreis- bzw. Ringbahn angeordnet. Der elektrische Leiter 12 ist vorzugsweise umlaufend geschlossen angeordnet, abgesehen von einem kleinen Teilstück z.B. in einer Ecke der Mutter. Dabei umschließt der Leiter die Mutter im Wesentlichen, dies bedeutet so, dass eine Zerstörung der Mutter in jedem Fall zu einer Zerstörung der Sollbruchstelle 9 des Überwachungsaufsatzes führt. Durch die Zerstörung der Sollbruchstelle 9 erfolgt dann auch eine Zerstörung des elektrischen Leiters 12.

Wird die Leiterbahn 12 durch einen Bruch des Überwachungsaufsatzes 1 oder zumindest des Vorsprungs 15 unterbrochen, so steigt beispielsweise ein mit einer Auswertungselektronik detektiertes Widerstandssignal rapide an. Dies ist ein Zeichen, dass die mechanische Festigkeit der Mutter 4 nicht mehr gegeben ist und z.B. ein Bruch, eine Deformierung oder ein Riss der Mutter erfolgt ist.

Es können bei Anstieg des Widerstandswertes Gegenmaßnahmen, z.B. die Betätigung der Bremse der Windkraftanlage, ergriffen werden.

Das Polymermaterial 13, in welchem die Leiterbahn eingebettet ist, schützt die Leiterbahn 12 vor Abrasion und verhindert ein Ablösen des Leiters von der Oberfläche z.B. bei Erschütterungen oder anderen mechanischen oder chemischen Einflüssen, was zu einer Unterbrechung des Leiters und zu einem unbeabsichtigten Widerstandsanstieg führen kann.

Das Polymermaterial mit dem elektrischen Leiter kann somit an dem Hülsenabschnitt 14 angeordnet sein oder Teil des Hülsenabschnitts 14 sein. In letzterem Fall ist das Polymermaterial in welchem der elektrische Leiter eingebettet ist vorzugsweise das Polymermaterial aus welchem der gesamte Hülsenabschnitt 14 besteht.

Alternativ zu einem eingebetteten Leiter kann der Hülsenabschnitt auch ein elektrisch leitendes Polymermaterial aufweisen, welches nahezu um den gesamten Umfang des Hülsenabschnitts verläuft. Dieses Polymermaterial ist lediglich zwischen einer ersten Kontaktierungsstelle 6 und einer zweiten Kontaktierungsstelle 6 unterbrochen. An der ersten der beiden Kontaktierungsstellen 6 kann analog wie in den anderen Ausführungsbeispielen ein Einspeisen einer Spannung oder eines spannungsproportionalen Signals erfolgen und der zweiten der beiden Kontaktierungsstellen kann ein Abgriff der Spannung oder des spannungsproportionalen Signals erfolgen.

Die elektrische Leitfähigkeit des Polymers kann durch Zugabe von Metallpulver oder Metallspäne eines elektrisch leitenden Metalls vor dem Spritzgießen erreicht werden. Das Spritzgießen des Hülsenabschnitts mit dem elektrisch nicht leitenden und dem elektrisch leitenden Polymermaterial kann bevorzugt im Rahmen eines Zweikomponenten-Spritzgießens erfolgen.

Die Gesamtheit aus elektrischem Leiter 12 und elektrisch nicht leitendem Polymermaterial ist besonders bevorzugt als spritzgegossener Schaltungsträger, ein sogenanntes "Molded Interconnect Device" (kurz: MID) ausgebildet. Dieser kann als der Hülsenabschnitt 14 des Überwachungsaufsatz 1 ausgebildet sein oder mit diesem verbunden sein.

Die Leiterbahn 12 ist auf einer Ringbahn um die Mutter 4 herumgeführt und mündet an zwei nebeneinander angeordneten Kontaktierungsstellen 6 in einem Kontaktierungsbereich, an welchem Kabel 2 oder andere Signalleitungen festlegbar sind.

Das Polymermaterial 13 kann im Unterschied zu einer Leiterplatte aus einem Thermoplast hergestellt werden. Typischerweise bestehen Leiterplatten zum Großteil aus einem Duroplast.

Die Herstellung als spritzgegossener Schaltungsträger kann durch einen Zweikomponentenspritzguss, ein Heißprägen, ein Maskenbelichtungsverfahren, eine Laserstrukturierung und/oder ein Folienhinterspritzen erfolgen.

Beim Zweikomponentenspritzguss bildet ein Kunststoff die Polymermatrix 13 als zumindest zwei Grundkörper aus. Ein erster Grundkörper ist ein Kunststoffkörper und ein zweiter Grundkörper ist metallisierbar und weist den Leiter 12 auf.

Zum Metallisieren kann beispielsweise beim Spritzgießen für den ersten Schuss ein metallisierbarer, nicht elektrisch leitender Kunststoff verwendet werden. Sodann wird die Leiterbahngeometrie der Metallschicht abgebildet. Im zweiten Schuss werden die Bereiche zwischen den Leiterbahnen mit einem nicht metallisierbaren Kunststoff aufgefüllt. Dieses Verfahren ist auch als PCK-Verfahren bekannt.

Alternativ kann im ersten Schuss die Leiterbahnstruktur als Vertiefung aus der nichtmetallisierbaren Komponente gespritzt werden und es können dann in einem zweiten Schuss die Vertiefungen mit einem metallisierbaren Komponente aufgefüllt werden. Nach dem zweiten Schuss hat das Polymermaterial 13 seine Grundform und es wird sodann ein elektrisch leitendes Metall, z.B. Kupfer, auf den metallisierbaren Kunststoff aufgebracht. Dies kann durch Galvanisieren erfolgen.

Beim alternativen Heißprägeverfahren kann eine oberflächenmodifizierte Metallfolie mit einem Prägewerkzeug in ihrer Leiterbahngeometrie gestanzt werden und mittels Druck und Wärme mit dem gespritzten Polymermaterial 13 verbunden werden. Die Prägefolien können mit einem Haftvermittler, z.B. einem Klebstoff, versehen sein.

Bei der Laserstrukturierung kann bevorzugt die sogenannte Laser-Direkt-Strukturierung (LDS-Verfahren) eingesetzt werden, beispielsweise, um in einem Basisteil aus einem Kunststoff mit einem Laser Vertiefungen auszubilden, in welche dann der Leiter eingebettet wird.

Beim Folienhinterspritzen kann eine ein- oder mehrlagige flexible Leiterbahnfolie in ein Spritzgusswerkzeug eingelegt und mit geeigneten Kunststoffen unter Bildung des Polymermaterials hinterspritzt werden.

Bevorzugt umfasst das Polymermaterial Kunststoffe wie Polyamid, z.B. PA66, Polybutylenterephthalat, Acrylnitril-Butadien-Styrol und/oder Polypropylen jeweils mit oder ohne Glasfasern.

Die erfindungsgemäßen Schraubverbindungen können überall da eingesetzt werden, wo hohe Kräfte auf die mechanischen Verbindungselemente wirken. Ein besonderer Anwendungsbereich ist dabei der Einsatz der Schraubverbindung an einer Rotornabe einer Windkraftanlage.

Windkraftanlagen werden allgemein oftmals auch als Windräder bezeichnet und wurden vielfach im Stand der Technik, beispielsweise im Fachbuch "Windkraftanlagen: Grundlagen, Technik, Einsatz, Wirtschaftlichkeit, Erich Hau, Berlin/ Heidelberg 2014", beschrieben. Eine für die Erfindung geeignete und mit dieser kombinierbare Windkraft-Energieerzeugungsanlage weist dabei typischerweise einen Turm mit einem Fundament und/oder einer Offshore-Basis, eine Elektrik bzw. Einspeisung, ein Maschinenhaus, sowie am Maschinenhaus festgelegte Rotorblätter auf.

Die Rotorblätter sind dabei an einer Rotornabe eines Maschinenstrangs festgelegt. Diese Rotornabe wird durch Windkraft in Drehbewegung versetzt und überträgt diese Drehbewegung mittels eines Getriebes an einen Generator zur Energieerzeugung. Typischerweise weist eine Windkraftanlage zudem eine Bremse, z.B. eine Scheibenbremse, auf, welche die Bewegungsenergie des Rotors aufnimmt.

Im Gehäuse einer Windkraftanlage sind die Rotorblätter vermittels von Flanschanschlüssen an der Rotornabe angebracht.

Bei der in Fig. 6 dargestellten Variante eines erfindungsgemäßen Überwachungsaufsatzes 1 ist der Leiter 12, insbesondere der elektrische Leiter, direkt in das Material, insbesondere das Polymermaterial, des Hülsenabschnitts 14, an einem Teil seines Umfangs - hier ca. über seinen halben Umfang - eingebettet worden.

Zusätzlich ist der Hülsenabschnitt 14 hier axial sehr kurz ausgestaltet - z.B. nur einige wenige mm lang -, so dass er einen Ring bildet. Ein Ring ist im Sinne dieser Beschreibung ein kurzer Hülsenabschnitt.

Dabei kann der Leiter 12 zur Herstellung direkt in die Gussform für den Hülsenabschnitt 12 eingelegt und mit Material jedenfalls an einem Teil seines Umfangs ummantelt, insbesondere mit dem Polymermaterial umspritzt werden. Eine solche Ausgestaltung ist in Fig. 6a) bis d) dargestellt. Der Leiter ist hier an bzw. mit einem Teil seines Umfangs - beispielsweise etwa über seinen halben Umfang - in eine Art Rinne eingebettet (Fig. 6c).

In das Polymermaterial sind nach Fig. 6 zudem einer oder mehrere Magneten 17 integriert worden, die zur Befestigung des Hülsenabschnittes 14 an dem zu überwachenden Bauteil dienen. Die Magneten 17 können beispielsweise ganz oder abschnittsweise mit dem Material des Hülsenabschnittes 14 ummantelt, insbesondere ganz oder teilweise umspritzt sein. Sie können auch in Ausnehmungen des Hülsenabschnitts 14 eingesteckt sein, beispielsweise in axial von dem übrigen Hülsenabschnitt vorstehende, vorzugsweise umfangsverteilt angeordnete Dome 18.

Die Festlegung bzw. Befestigung kann dann dadurch erfolgen, dass der Hülsenabschnitt auf eine Mutter gesetzt wird und die Magneten mit einem unterhalb der Mutter befindlichen ferromagnetischen Bauteil zusammenwirken.

Ein besonderer Vorteil dieser Ausgestaltung liegt darin, dass derart auch Muttern an sehr kurzen Gewindebolzen überwacht werden können, da der Hülsenabschnitt dann nur einen sehr kurzen Bolzenabschnitt zur radialen Sicherung benötigt.

### Bezugszeichen

- 1: Überwachungsaufsatz
- 2: Gewindebolzen
- 3: Gewinde
- 4: Mutter
- 5: Sprengring
- 6: Kontaktierungsstelle
- 7: Aussparungen
- 8: Eckelement
- 9: Sollbruchstelle
- 10: Steg
- 11: Steg
- 12: elektrischer Leiter
- 13: elektrisch nicht leitendes Polymermaterial
- 14: Hülsenabschnitt
- 15: Vorsprung
- 16: Polymerfolie
- 17: Magnete
- 18: Dome

## Patentansprüche

1. Überwachungsaufsatz (1) zur Überwachung einer Mutter (4) einer Schraubverbindung auf Rissbildung, Deformation und/oder Bruch, wobei der Überwachungsaufsatz (1) einen auf den Außenumfang der Mutter (4) aufsetzbaren Hülsenabschnitt (14) mit einem Leiter (12) aufweist, der bei einer Deformation, einem Riss oder einem Bruch der Mutter (4) unterbrochen wird,
**dadurch gekennzeichnet, dass** der Leiter (12) in wenigstens ein Material eingebettet ist und dass der Überwachungsaufsatz einen oder mehrere Magneten als Befestigungsmittel aufweist.

2. Überwachungsaufsatz (1) nach Anspruch 1, **dadurch gekennzeichnet, dass** der Leiter ein elektrischer Leiter (12) oder ein optischer Leiter ist, der in ein elektrisch und/oder optisch nicht leitendes Material eingebettet ist und/oder **dass** der Leiter bezogen auf seine axiale Erstreckung ganz oder abschnittsweise sowie bezogen auf seinen Umfang ganz oder teilweise in das elektrisch und/oder optisch nicht leitende Material eingebettet ist.

3. Überwachungsaufsatz nach einem der vorstehenden Ansprüche, **dadurch gekennzeichnet, dass** das Material ein Kunststoffmaterial, insbesondere ein Polymermaterial (13), ist oder **dass** das Material ein Glasmaterial, ein Keramikmaterial, ein Kohlefasermaterial, Holz oder Metall ist.

4. Überwachungsaufsatz (1) nach einem der vorstehenden Ansprüche,
**dadurch gekennzeichnet, dass** der elektrische Leiter (12) zwischen mehrere Bereiche, insbesondere Schichten, aus einem oder mehreren Material(ien) eingebettet ist, wobei wenigstens einer der Materialbereiche nichtleitend ist.

5. Überwachungsaufsatz (1) zur Überwachung einer Mutter (4) einer Schraubverbindung auf Rissbildung, Deformation und/oder Bruch, wobei der Überwachungsaufsatz (1) einen auf den Außenumfang der Mutter (4) aufsetzbaren Hülsenabschnitt (14) mit einen elektrischen Leiter (12) aufweist, der bei einer Deformation, einem Riss oder einem Bruch der Mutter (4) unterbrochen wird, **dadurch gekennzeichnet, dass** der elektrische Leiter (12) ganz oder teilweise aus einem elektrisch leitfähigen Polymermaterial (13) besteht und dass der Überwachungsaufsatz einen oder mehrere Magneten als Befestigungsmittel aufweist.

6. Überwachungsaufsatz nach einem der vorstehenden Ansprüche, **dadurch gekennzeichnet, dass** der Hülsenabschnitt (14) als ein spritzgegossener Schaltungsträger ausgebildet ist oder einen spritzgegossenen Schaltungsträger aufweist oder dass der Hülsenabschnitt (14) und/oder der Leiter als ein im 3-D-Druck gebildeter Körper ausgebildet ist/sind.

7. Überwachungsaufsatz nach einem der vorstehenden Ansprüche, **dadurch gekennzeichnet, dass** der elektrische Leiter (12) ein Metalldraht ist oder als eine Leiterbahn ausgebildet ist und/oder **dass** der elektrische Leiter (12) als nicht-umfangsgeschlossener Ring in das Polymermaterial (13) eingebettet ist.

8. Überwachungsaufsatz nach einem der vorhergehenden Ansprüche, **dadurch gekennzeichnet, dass** der Hülsenabschnitt (14) eine oder mehrere Sollbruchstellen (9) aufweist.

9. Überwachungsaufsatz nach einem der vorhergehenden Ansprüche 5 bis 8, **dadurch gekennzeichnet, dass** der Hülsenabschnitt (14) einstückig aus einem einzigen Polymermaterial (13) ausgebildet ist, in welchen der Leiter (12) eingebettet, vorzugsweise umspritzt, ist.

10. Überwachungsaufsatz nach einem der vorhergehenden Ansprüche, **dadurch gekennzeichnet, dass** das elektrisch nicht leitende Polymermaterial (13) als eine ein- oder mehrschichtige Polymerfolie ausgebildet ist, in welche der elektrische Leiter (12) eingebettet ist und welche an dem Hülsenabschnitt (14) angeordnet ist, wobei die Polymerfolie ein spritzgegossener Schaltungsträger ist.

11. Überwachungsaufsatz nach einem der vorhergehenden Ansprüche, **dadurch gekennzeichnet, dass** der Hülsenabschnitt (14) innen eine Geometrie, insbesondere eine Mehrkantform, zur Einfassung der Mutter (4) mit einer entsprechenden Geometrie, insbesondere Mehrkantform, aufweist.

12. Überwachungsaufsatz nach einem der vorhergehenden Ansprüche, **dadurch gekennzeichnet, dass** der Überwachungsaufsatz (1) eine oder mehrere erste Rastnasen aufweist, welche in das Gewinde (3) einer Schraube oder eines Gewindebolzens (2) eingreifen

13. Überwachungsaufsatz nach einem der vorhergehenden Ansprüche, **dadurch gekennzeichnet, dass** das elektrisch nicht leitende Material ein Glasmaterial, ein Kunststoffmaterial, ein Keramikmaterial, ein Kohlefasermaterial, ein Holzmaterial oder ein Metallmaterial oder ein Verbundwerkstoff aus einem oder mehreren dieser Stoffe ist und/oder **dass das** Polymermaterial (13) ein Thermoplast, insbesondere ein Polyamid, ein Polybutylenterephthalat, ein Polypropylen und/oder ein Acrylnitril-Butadien-Styrol ist und/oder PEEK (Polyetheretherketone) ist und/oder dass das elektrisch nicht leitende Polymermaterial (13) ein Thermoplast, insbesondere ein Polyamid, ein Polybutylenterephthalat, ein Polypropylen und/oder ein Acrylnitril-Butadien-Styrol ist.

14. Überwachungsaufsatz nach einem der vorhergehenden Ansprüche, insbesondere nach Anspruch 2, **dadurch gekennzeichnet, dass** das elektrisch leitende Polymermaterial ein Polymermaterial mit elektrisch leitenden Zusätzen, insbesondere mit metallischen Zusätzen ist.

15. Überwachungsaufsatz nach einem der vorhergehenden Ansprüche, **dadurch gekennzeichnet, dass** der Leiter direkt in das Material, insbesondere das Polymermaterial des Hülsenabschnitts, integriert bzw. eingebettet worden und/oder **dass** der Leiter direkt in die Gussform des Hülsenabschnitts eingelegt und mit Polymermaterial umspritzt werden.

16. Überwachungsaufsatz nach einem der vorhergehenden Ansprüche, **dadurch gekennzeichnet, dass** der Hülsenabschnitt axial so kurz ausgestaltet ist, dass er einen Ring bildet.

17. Überwachungsaufsatz nach einem der vorhergehenden Ansprüche, **dadurch gekennzeichnet, dass** er ganz oder teilweise in einem 3-D-Druckverfahren hergestellt ist.

## Claims

1. A monitoring attachment (1) for monitoring a nut (4) of a screw connection for crack formation, deformation and/or breakage, wherein the monitoring attachment (1) has a socket portion (14), which can be placed on the outer circumference of the nut (4), with a conductor (12) that is interrupted in the case of deformation, crack formation or breakage of the nut (4), **characterized in that** the conductor (12) is embedded in at least one material and that the monitoring attachment has one or more magnets as fastening means.

2. The monitoring attachment (1) according to claim 1, **characterized in that** the conductor is an electrical conductor (12) or an optical conductor, which is embedded in an electrically and/or optically nonconductive material and/or the conductor, based on its axial dimension, is completely or in sections, as well as based on its circumference, completely or partially embedded in the e electrically and/or optically nonconductive material.

3. The monitoring attachment according to one of the preceding claims, **characterized in that** the material is a plastic material, especially a polymer material (13) or that the material is a glass material, a ceramic material, a carbon fiber material, wood or metal.

4. The monitoring attachment (1) according to one of the preceding claims,
**characterized in that** the electrical conductor (12) is embedded between several areas, especially layers, made of one or more material(s), wherein at least one of the material areas is nonconductive.

5. A monitoring attachment (1) for monitoring a nut (4) of a screw connection for crack formation, deformation and/or breakage, wherein the monitoring attachment (1) has a socket portion (14) that can be placed on the outer circumference of the nut (4), with an electrical conductor (12) that is interrupted in the case of deformation, crack formation or breakage of the nut (4),
**characterized in that** the electrical conductor (12) consists completely or partially of an electrically conductive polymer material (13) and that the monitoring attachment has one or more magnets as fastening means.

6. The monitoring attachment according to one of the preceding claims,
**characterized in that** the socket portion (14) is made as an injection-molded interconnect device or has an injection-molded interconnect device or that the socket portion (14) and/or the conductor is/are formed as an article made in a 3D printer.

7. The monitoring attachment according to one the preceding claims,
**characterized in that** the electrical conductor (12) is a metal wire or is made as a circuit track and/or the electrical conductor (12) is embedded as a non-peripherally closed ring in the polymer material (13).

8. The monitoring attachment according to one of the preceding claims,
**characterized in that** the socket portion (14) has one or more predetermined break points (9).

9. The monitoring attachment according to one of the preceding claims 5 to 8,
**characterized in that** the socket portion (14) is made in one piece of a single polymer material (13), in which the conductor (12) is embedded, preferably molded around.

10. The monitoring attachment according to one of the preceding claims,
**characterized in that** the electrically nonconductive polymer material (13) is made as a single- or multilayered polymer film, in which the electrical conductor (12) is embedded and which is arranged on the socket portion (14)wherein the polymer film is an injection-molded interconnect device.

11. The monitoring attachment according to one of the preceding claims,
**characterized in that** the socket portion (14) on the inside has a geometry, preferably a polygonal shape, for surrounding the nut (4) with a corresponding geometry, especially a polygonal shape.

12. The monitoring attachment according to one of the preceding claims,
**characterized in that** the monitoring attachment (1) has one or more first lugs which engage in the threads (3) of a screw or a threaded bolt (2).

13. The monitoring attachment according to one of the preceding claims,
**characterized in that** the electrically nonconductive material is a glass material, a plastic material, a ceramic material, a carbon fiber material, a wood material or a metal material or a composite material made of one or more of these substances and/or the polymer material (13) is a thermoplastic, especially a polyamide, a polybutadiene terephthalate, a polypropylene and/or an acrylonitrile-butadiene-styrene and/or is PEEK (polyetheretherketone)and/or the electrically nonconductive polymer material (13) is a thermoplastic, especially a polyamide, a polybutadiene terephthalate, a polypropylene and/or an acrylonitrile-butadiene-styrene.

14. The monitoring attachment according to one of the preceding claims 2,
**characterized in that** the electrically conductive polymer material is a polymer material with electrically conductive additives, especially with metal additives.

15. The monitoring attachment according to one of the preceding claims,
**characterized in that** the conductor was integrated directly into the material, especially the polymer material of the socket portion and/or that the conductor is laid directly in the casting mold of the socket portion and polymer material is injected around it.

16. The monitoring attachment according to one of the preceding claims,
**characterized in that** the socket portion is made so short axially that it forms a ring.

17. The monitoring attachment according to one of the preceding claims,
**characterized in that** it is made partially or completely using a 3D printing method.

## Revendications

1. Embout de surveillance (1) pour la surveillance d'un écrou (4) d'un assemblage vissé afin de détecter la formation de fissures, la déformation et/ou le bris de l'écrou, lequel embout de surveillance (1) présente une partie en forme de douille (14) pouvant être posée sur une circonférence extérieure de l'écrou (4) et munie d'un conducteur (12) qui est coupé en cas de déformation, de fissure ou de bris de l'écrou (4), **caractérisé en ce que** le conducteur (12) est inclus dans au moins un matériau et **en ce que** l'embout de surveillance comporte un ou plusieurs aimants servant de moyens de fixation.

2. Embout de surveillance (1) selon la revendication 1, **caractérisé en ce que** le conducteur est un conducteur électrique (12) ou un conducteur optique qui est inclus dans un matériau non conducteur électrique et/ou optique et/ou **en ce que** le conducteur est inclus, entièrement ou en partie et sur tout ou partie de sa circonférence, dans le matériau non conducteur électrique et/ou optique.

3. Embout de surveillance selon l'une des revendications précédentes, **caractérisé en ce que** le matériau est un matériau synthétique, en particulier un matériau polymère (13), ou **en ce que** le matériau est un verre, un matériau céramique, un matériau en fibres de carbone, du bois ou du métal.

4. Embout de surveillance (1) selon l'une des revendications précédentes, **caractérisé en ce que** le conducteur électrique (12) est inclus entre plusieurs zones, en particulier plusieurs couches, d'un ou plusieurs matériaux, l'une au moins des zones de matériau étant non conductrice.

5. Embout de surveillance (1) pour la surveillance d'un écrou (4) d'un assemblage vissé afin de détecter la formation de fissures, la déformation et/ou le bris de l'écrou, lequel embout de surveillance (1) présente une partie en forme de douille (14) pouvant être posée sur une circonférence extérieure de l'écrou (4) et munie d'un conducteur électrique (12) qui est coupé en cas de déformation, de fissure ou de bris de l'écrou (4), **caractérisé en ce que** le conducteur électrique (12) se compose entièrement ou partiellement d'un matériau polymère (13) conducteur électrique et **en ce que** l'embout de surveillance comporte un ou plusieurs aimants servant de moyens de fixation.

6. Embout de surveillance selon l'une des revendications précédentes, **caractérisé en ce que** la partie en forme de douille (14) est conçue comme un support de circuits moulé par injection ou présente un support de circuits moulé par injection ou **en ce que** la partie en forme de douille (14) et/ou le conducteur sont conformés comme un corps formé par impression 3D.

7. Embout de surveillance selon l'une des revendications précédentes, **caractérisé en ce que** le conducteur électrique (12) est un fil métallique ou est conformé comme une piste conductrice et/ou **en ce que** le conducteur électrique (12) est intégré dans le matériau polymère (13) sous la forme d'un anneau non fermé sur sa circonférence.

8. Embout de surveillance selon l'une des revendications précédentes, **caractérisé en ce que** la partie en forme de douille (14) présente un ou plusieurs points de rupture (9).

9. Embout de surveillance selon l'une des revendications 5 à 8, **caractérisé en ce que** la partie en forme de douille (14) est formée d'un seul tenant à partir d'un seul matériau polymère (13) dans lequel le conducteur (12) est inclus, de préférence enrobé par injection.

10. Embout de surveillance selon l'une des revendications précédentes, **caractérisé en ce que** le matériau polymère (13) non conducteur électrique est conformé comme une feuille de polymère à une ou plusieurs couches, dans laquelle le conducteur électrique (12) est inclus et qui est disposée sur la partie en forme de douille (14), la feuille de polymère étant un support de circuits moulé par injection.

11. Embout de surveillance selon l'une des revendications précédentes, **caractérisé en ce que** la partie en forme de douille (14) présente sur l'intérieur une géométrie, en particulier une forme polygonale, pour saisir l'écrou (4) d'une géométrie correspondante, en particulier polygonale.

12. Embout de surveillance selon l'une des revendications précédentes, **caractérisé en ce que** l'embout de surveillance (1) présente un ou plusieurs premiers ergots d'enclenchement qui se mettent en prise dans le filetage (3) d'une vis ou d'un boulon fileté (2).

13. Embout de surveillance selon l'une des revendications précédentes, **caractérisé en ce que** le matériau non conducteur électrique est un verre, un matériau synthétique, un matériau céramique, un matériau en fibres de carbone, un matériau à base de bois ou un matériau métallique ou un matériau composite formé d'un ou plusieurs de ces matériaux et/ou **en ce que** le matériau polymère (13) est un thermoplastique, en particulier un polyamide, un téréphtalate de polybutylène, un polypropylène et/ou un acrylonitrile-butadiène-styrène et/ou une PEEK (polyéther-éther-cétone) et/ou **en ce que** le matériau polymère (13) non conducteur électrique est un thermoplastique, en particulier un polyamide, un téréphtalate de polybutylène, un polypropylène et/ou un acrylonitrile-butadiène-styrène.

14. Embout de surveillance selon l'une des revendications précédentes, en particulier selon la revendication 2, **caractérisé en ce que** le matériau polymère conducteur électrique est un matériau polymère avec des additifs conducteurs électriques, en particulier avec des additifs métalliques.

15. Embout de surveillance selon l'une des revendications précédentes, **caractérisé en ce que** le conducteur est directement intégré ou inclus dans le matériau, en particulier le matériau polymère de la partie en forme de douille, et/ou **en ce que** le conducteur est directement inséré dans le moule de coulée de la partie en forme de douille et enrobé de matériau polymère.

16. Embout de surveillance selon l'une des revendications précédentes, **caractérisé en ce que** la partie en forme de douille est suffisamment courte dans le sens axial pour former un anneau.

17. Embout de surveillance selon l'une des revendications précédentes, **caractérisé en ce qu'**il est fabriqué entièrement ou en partie par un procédé d'impression 3D.
